# EUROPÄISCHE PATENTSCHRIFT

(11) **EP 3 842 299 B1**
(45) Veröffentlichungstag und Bekanntmachung des Hinweises auf die Patenterteilung: **02.10.2024**
(21) Anmeldenummer: 21157965.1
(22) Anmeldetag: 14.08.2015
(51) Int. Cl.: B60S 3/06

(54) **FAHRZEUGWASCHANLAGE UND VERFAHREN ZU DEREN BETRIEB**
VEHICLE WASHING INSTALLATION AND METHOD FOR THE OPERATION THEREOF
INSTALLATION DE LAVAGE DE VÉHICULE ET PROCÉDÉ POUR FAIRE FONCTIONNER CELLE-CI

(30) Priorität: 28.08.2014 DE 102014112388
(43) Veröffentlichungstag der Anmeldung: 30.06.2021
(62) Teilanmeldung aus: 18195973.5
(73) Patentinhaber: WashTec Holding GmbH, 86153 Augsburg (DE)
(72) Erfinder: AUER, Robert, 86391 Stadtbergen (DE); HOBMEIER, Christoph, 94436 Simbach (DE); STECHER, David, 86653 Monheim (DE)
(74) Vertreter: Meissner Bolte Partnerschaft mbB

(56) Entgegenhaltungen:
- DE-U1- 29 814 758
- JP-A- H05 213 163
- JP-A- H11 129 873
- ANONYMOUS: "MultiFlex-System auf Automechanika", KARCHER, 1 January 2014 (2014-01-01), XP055912276
- ANONYMOUS: "Prospekt: Lok- und Zugwaschanlagen RBF 6000/RBB 6000/RBR 6000/RBL 6000", KÄRCHER, 5 January 1995 (1995-01-05), XP093091294

## Beschreibung

Die Erfindung betrifft eine Fahrzeugwaschanlage nach dem Oberbegriff des Anspruchs 1 sowie ein Verfahren zum Betrieb einer solchen Fahrzeugwaschanlage.

Ein bekanntes Problem beim Waschen von Fahrzeugen, insbesondere Automobilen in Fahrzeugwaschanlagen ist es, die oft stark geneigten und gekrümmten Seitenflächen befriedigend zu reinigen. Dieses Problem wurde zunächst dadurch gelöst, dass die hierzu vorgesehenen senkrecht hängenden, drehbaren Seitenwaschbürsten frei pendelnd aufgehängt wurden.

So offenbart die DE 1 936 889 eine Vorrichtung zum Waschen der Seitenflächen eines Fahrzeuges mit frei nach allen Seiten pendelnd am oberen Ende der Waschbürstenachse kardanisch aufgehängten Seitenwaschbürsten. Beim Anfahren der Waschbürste an das Fahrzeug kann die Seitenwaschbürste sich somit an die geneigten Seitenflächen des Fahrzeugs anschmiegen und reinigen. Nachteilig dabei ist, dass die Waschbürste mit ihrem Gewicht auf die Seitenflächen drückt, was stärker geneigte Seitenflächen unerwünscht stark belastet.

Um dieses Aufliegen der Waschbürsten auf den Seitenflächen zu verringern, ist aus dem Stand der Technik bekannt, die Drehachsen der Seitenwaschbürsten aktiv quer zur Längsrichtung zu neigen und in der geneigten Stellung zu halten, um die durch das Gewicht der Seitenwaschbürste erzeugten Kräfte auf die Seitenflächen zu minimieren. Derartige Lösungen sind aus der DE 298 14 758 U1, DE 196 20 684 B4, JP 08-332 921 A, JP 03 079 455 A bekannt.

Diese Ausführungen weisen jedoch den Nachteil auf, dass sie ausschließlich zum Anpassen der Seitenbürsten an geneigte Seitenflächen geeignet sind. In zunehmendem Maße sind aber gerade bei Fahrzeugen mit Schrägheck sowohl die Seitenflächen als auch die Heckflächen immer stärker geneigt. Mit den bekannten Vorrichtungen werden zwar die Seitenflächen in ausreichendem Maß von den schräg gestellten Seitenwaschbürsten gereinigt, und die schrägen Heckflächen können durch die quer zur Längsrichtung verlaufende horizontale Dachwaschbürste gereinigt werden. Gerade in den Übergangsbereichen der schrägen Heckfläche zu den schrägen Seitenflächen ist das Reinigungsergebnis damit aber unbefriedigend.

Um dies zu verbessern, schlägt die DE 10 2007 056 701 B3 vor, eine einzelne Waschbürste an einem langen Auslegerarm anzubringen, der in einer horizontalen Ebene über dem Fahrzeug schwenkbar ist. Am freien Ende des Auslegerarms ist dann eine hängende Waschbürste an einer Gelenkanordnung in einem Winkel von 30° bis 60° frei pendelnd aufgehängt. Hierdurch werden zwar die schrägen Übergangsbereiche gut gereinigt, allerdings besteht auch hier das Problem, dass bei stärkeren Neigungen die Waschbürste mit ihrer Gewichtskraft auf die Fahrzeugseiten- und Heckflächen drückt. Weiter fängt die Waschbürste bei dieser freien Aufhängung leicht zu schwingen an und führt dann unerwünschte Schwenkbewegungen aus, welche das Reinigungsergebnis verschlechtern und das Fahrzeug zusätzlich belasten. Um dies zu verhindern, kann die Schwenkbewegung durch Dämpfer für die Gelenkverbindung und/oder die Waschbürste vorgesehen werden.

Eine entsprechende Ausgestaltung offenbart die US 5 715 558 mit an freien Enden zweier Schwenkarme frei pendelnd aufgehängte Waschbürsten. Auch dort wird die Schwenkbewegung durch Dämpfer abgedämpft, sodass die rotierenden Waschbürsten nicht wild hin und her schwenken können, wenn sie an das Fahrzeug herangeführt werden.

Diese Ausführungen sind aufwendig in der Konstruktion und der Schwenkarm und seine Schwenkgelenke müssen sehr robust ausgeführt sein, um die durch die Drehung und Schwenkbewegung der Waschbürste auftretenden hohen Kräfte aufnehmen zu können.

Eine gattungsgemäße Fahrzeugwaschanlage ist aus dem im Jahr 1995 hergestellten Prospekt: Lok- und Zugwaschanlagen RBF 6000/RBB 6000/RBR 6000/RBL 6000 von der Firma Kärcher bekannt. Die JP H05 213163 A offenbart ebenfalls eine relevante Fahrzeugwaschanlage.

Aufgabe der vorliegenden Erfindung ist es deshalb, die oben genannten Nachteile zu überwinden und eine Fahrzeugwaschanlage sowie ein Verfahren zu deren Betrieb bereitzustellen, welche ein befriedigendes Waschergebnis auch von schräg geneigten Seitenflächen und Heckflächen des Fahrzeugs ermöglichen, insbesondere auch der Übergänge von Seitenflächen und Heckflächen, der sogenannten C-Säule.

Diese Aufgabe löst die Erfindung durch eine Fahrzeugwaschanlage mit den Merkmalen des Anspruchs 1 sowie ein Verfahren zur Betrieb einer solchen Fahrzeugwaschanlage mit den Merkmalen des Anspruchs 7. Vorteilhafte Ausgestaltungen und zweckmäßige Weiterbildungen der Erfindung sind in den Unteransprüchen angegeben.

Bevorzugt kann die erste Schwenkachse in eine Längsrichtung der Fahrzeugwaschanlage verlaufen, und/oder die zweite Schwenkachse in eine quer zur Längsrichtung der Fahrzeugwaschanlage verlaufende Querrichtung. Weiter können in einer vorteilhaften Fortbildung die erste Schwenkachse und die zweite Schwenkachse zueinander rechtwinklig verlaufen. Bevorzugt können die erste Schwenkachse bzw. die zweite Schwenkachse auch in einem Bereich von bis zu 20°, bevorzugt bis zu 10° und besonders bevorzugt bis zu einigen Graden von einem exakten parallelen oder rechtwinkligen Verlauf zur Längsrichtung abweichen. Die erste und zweite Schwenkachse können vorteilhaft auch in einem um bis zu 20°, bevorzugt bis zu 10° und besonders bevorzugt bis zu einigen Grad von einem exakten rechtwinkligen Verlauf abweichenden Winkelbereich zueinander verlaufen.

Erfindungsgemäß sind der erste Stellantrieb und der zweite Stellantrieb Linearantriebe, nämlich Zweistellungszylinder oder beliebige verstellbare Mehrstellungszylinder.

Nach der Erfindung weist die Aufhängung eine erste Lagerstütze auf, die um die eine der Schwenkachsen drehbar an einer zweiten Lagerstütze gelagert ist, und die zweite Lagerstütze um die andere Schwenkachse drehbar an der Traverse gelagert ist, wobei der erste Stellantrieb zwischen erster Lagerstütze und zweiter Lagerstütze und der zweite Stellantrieb zwischen zweiter Lagerstütze und der Traverse wirkt, und wobei die erste Lagerstütze einen weitgehend rechtwinklig abstehenden ersten Lagersteg aufweist, der an seinem vorderen Ende erste Lagerflansche für die drehbare Befestigung einer ersten Kolbenstange eines ersten Stellzylinders, der den ersten Stellantriebs darstellt, aufweist, und der erste Stellzylinder über zweite Lagerflansche drehbar an der zweiten Lagerstütze gelagert ist.

Fahrzeugwaschanlage kann es sich vorteilhaft um eine Portalwaschanlage handeln, bei der die Seitenwaschbürsten an einem verfahrbaren Waschportal angeordnet sind, oder um eine Waschstraße, bei dem die Seitenwaschbürsten an einem feststehenden, portalförmigen Rahmen angeordnet sind.

Bevorzugt kann ein Neigungssensor zur Detektion der Neigung der Seitenwaschbürste um die erste Schwenkachse und/oder ein Neigungssensor zur Detektion der Neigung der Seitenwaschbürste um die zweite Schwenkachse vorgesehen sein. Hierdurch kann eine sehr genaue Erfassung der Neigung der betreffenden Schwenkachse und Seitenwaschbürste durchgeführt werden.

Erfindungsgemäß verlaufen die erste Schwenkachse und die zweite Schwenkachse im wesentlichen horizontal. Hierdurch kann die Lagerung der Waschbürste bei ausreichender Stabilität weiter vereinfacht werden. Weiter kann die Seitenwaschbürste nach unten frei hängend angeordnet sein, wodurch die Beweglichkeit der Waschbürste weiter verbessert werden kann.

Ein Verfahren zum Betrieb einer Fahrzeugwaschanlage, wie oben und nachfolgend beschrieben, weist erfindungsgemäß die folgenden Schritte auf: a) Detektieren und/oder Bestimmen der Neigung einer quer zur Längsrichtung verlaufenden ersten Fahrzeugfläche, b) Verschwenken der Seitenwaschbürste aus einer Grundstellung um die zweite Schwenkachse entsprechend der Neigung der ersten Fahrzeugfläche, und c) Bewegen der Seitenwaschbürste entlang der ersten Fahrzeugfläche zum Reinigen der ersten Fahrzeugfläche.

Vorteilhaft kann die Neigung mindestens einer sich an die erste Fahrzeugfläche anschließenden zweiten Fahrzeugfläche detektiert werden, und die Seitenwaschbürste mittels eines weiteren Stellantriebs um die erste Schwenkachse entsprechend der Neigung der zweiten Fahrzeugfläche verschwenkt werden, wenn in Schritt c) ein Übergangsbereich zwischen der ersten Fahrzeugfläche und der zweiten Fahrzeugfläche erreicht wird. Vorteilhaft kann dabei das Verschwenken der Seitenwaschbürste um die erste Schwenkachse während Schritt c) blockiert werden, um ein übermäßiges Pendeln der Seitenwaschbürste in Querrichtung zu verringern. Bevorzugt kann die Seitenwaschbürste zum Waschen der zweiten Fahrzeugfläche in die Grundstellung zurückgeschwenkt und dort gegen ein Verschwenken um die zweite Schwenkachse blockiert werden, so dass ein übermäßiges Pendeln in Längsrichtung vermieden wird.

Weitere Besonderheiten und Vorzüge der Erfindung ergeben sich aus der folgenden detaillierten Beschreibung bevorzugter Ausführungsbeispiele anhand der Zeichnungen. Es zeigen:
Fig. 1 eine schematische Seitenansicht einer erfindungsgemäßen Fahrzeugwaschanlage in einer ersten Stellung;
Fig. 2 die Seitenansicht der Fahrzeugwaschanlage aus Fig. 1 in einer zweiten Stellung;
Fig. 3 eine schematische Draufsicht auf die Fahrzeugwaschanlage aus Fig. 1 in der ersten Stellung;
Fig. 4 die Draufsicht aus Fig. 3 mit der Fahrzeugwaschanlage in der zweiten Stellung aus Fig. 2;
Fig. 5 die Draufsicht aus Fig. 3 mit der Fahrzeugwaschanlage in einer dritten Stellung;
Fig. 6 eine schematische dreidimensionale Ansicht einer Seitenwaschbürste- Aufhängung der Fahrzeugwaschanlage aus Fig. 1.

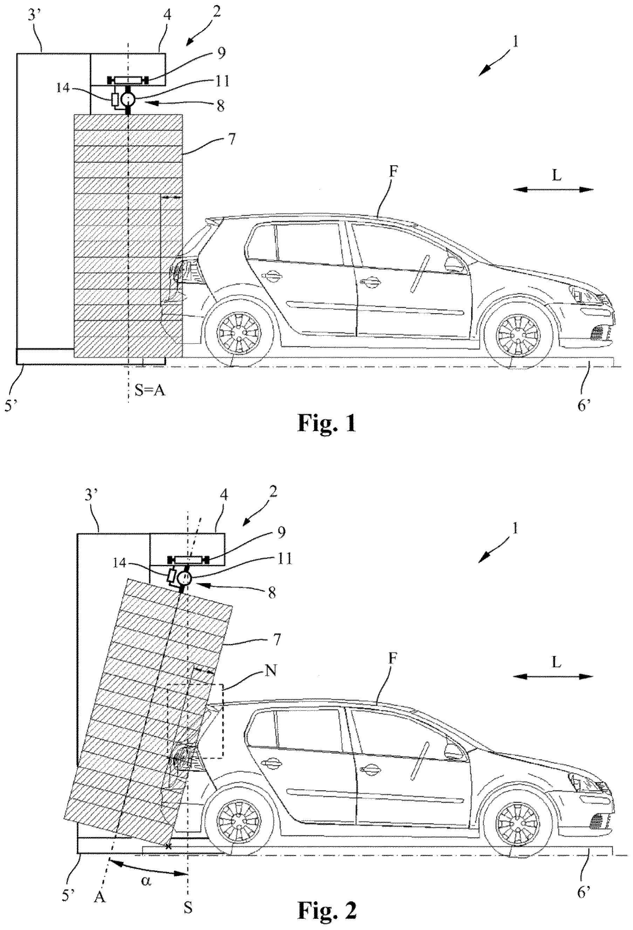

Fig. 1 bis 5 zeigen eine erfindungsgemäße Fahrzeugwaschanlage in Form einer schematisch dargestellten Portalwaschanlage 1 mit einem Waschportal 2. Das Waschportal 2 weist zwei im Wesentlichen senkrecht stehende Portalsäulen 3, 3' auf, die durch eine Portaltraverse 4 miteinander verbunden sind. Am unteren Ende der Portalsäulen 3, 3' sind Fahrfüße 5, 5' vorgesehen, mit denen das Waschportal 2 auf Fahrschienen 6, 6' in einer Längsrichtung L der Waschanlage 1 verfahrbar ist. Am Waschportal 2 sind vertikale Seitenwaschbürsten 7, 7', im Weiteren auch einfach nur als Waschbürsten 7, 7' bezeichnet, und eine nicht gezeichnete horizontale Dachwaschbürste angeordnet. Diese Ausbildung der Portalwaschanlage 1 ist an sich bekannt und bedarf deshalb keiner weiteren Erläuterung.

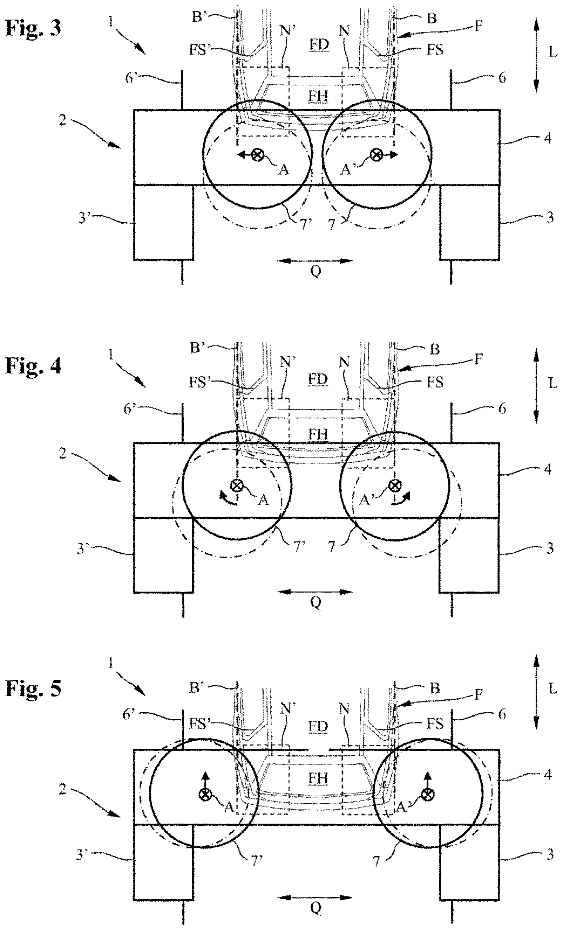

Da die Portalwaschanlage 1 bezüglich ihrer in Längsrichtung L verlaufenden Längsmittelachse symmetrisch ausgebildet ist, wird die Erfindung im Nachfolgenden vor allem anhand der in Fig. 3 bis 5 rechten Seite erläutert, entsprechende Ausführungen gelten entsprechend auch für die linke Seite. Für die Bauteile der linken Seite werden deshalb die mit einem Apostroph versehenen Bezugszeichen der entsprechenden Bauteile der rechten Seite verwendet. Dabei ist zur besseren Erläuterung der Erfindung in Fig. 1 und 2 lediglich der in Fig. 3 bis 5 linke Teil des Waschportals 2 mit der rechten Waschbürste 7 gezeigt.

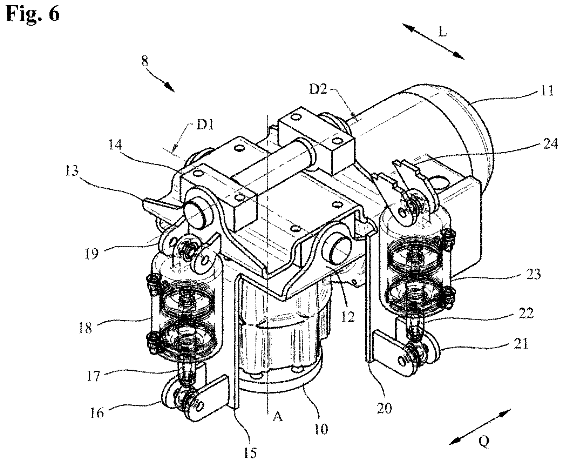

Erfindungsgemäß ist die Waschbürste 7 dabei über eine in Fig. 1 und 2 angedeutete, in Fig. 6 im Detail gezeigte Aufhängung 8 an einem in Fig. 1 und 2 schematisch angedeuteten Schlitten 9 aufgehängt. Der Schlitten 9 ist an der Portaltraverse 4 in einer zur Längsrichtung L quer verlaufenden Querrichtung Q verfahrbar.

Die Waschbürste 7 ist an einer Bürstenhalterung 10 der Aufhängung angeordnet. Die Bürstenhalterung 10 kann zusammen mit der Waschbürste 7 durch einen Antriebsmotor 11 über ein nicht gezeichnetes Getriebe um eine Drehachse A der Waschbürste 7 gedreht werden. Die Drehachse A und somit die Waschbürste 7 befinden sich dabei vor Beginn der Reinigung in der in Fig. 1 gezeigten senkrechten, unausgelenkten Grundstellung S.

Die Bürstenhaltung 10 und der Antriebsmotor 11 sind hierzu an einer ersten Lagerstütze 12 angeordnet, die ihrerseits um eine in Längsrichtung L verlaufende horizontale erste Schwenkachse D1 an einer zweiten Lagerstütze 13 angeordnet ist. Die zweite Lagerstütze 13 ist ihrerseits über Lagerblöcke 14 um eine in Querrichtung Q verlaufende horizontale zweite Schwenkachse D2 an dem Fahrschlitten 9 angeordnet. Die Waschbürste 7 ist somit ähnlich einem Kardangelenk in Längsrichtung L und Querrichtung Q frei pendelnd gelagert.

Um die Waschbürste 7 an den Übergang zwischen schrägen Seitenflächen FS und schräger Heckfläche FH eines Fahrzeugs F in ihrer Neigung aktiv anpassen zu können, weist die erste Lagerstütze 12 einen weitgehend rechtwinklig abstehenden Lagersteg 15 auf. An seinem vorderen Ende weist der erste Lagersteg 15 Lagerflansche 16 für die drehbare Befestigung einer Kolbenstange 17 eines ersten Stellzylinders 18 auf. Der erste Stellzylinder 18 selbst ist über Lagerflansche 19 drehbar an der zweiten Lagerstütze 13 gelagert. Durch den ersten Stellzylinder 18 kann somit die erste Lagerstütze 12 und folglich auch die Waschbürste 7 um die erste Schwenkachse D1 in Querrichtung Q schräg angestellt werden.

Um die Waschbürste 7 aktiv um einen Neigungswinkel α um die zweite Schwenkachse D2 in Längsrichtung L schwenken zu können, weist die zweite Lagerstütze 13 ebenfalls einen im Wesentlichen rechtwinklig davon abstehenden zweiten Lagersteg 20 auf. Der Lagersteg 20 trägt an seinem freien Ende Lagerflansche 21, an denen eine Kolbenstange 22 eines zweiten Stellzylinders 23 drehbar angelenkt ist. Der zweite Stellzylinder 23 ist seinerseits über Lagerflansche 24 drehbar an dem Fahrschlitten 9 angelenkt. Mit dem zweiten Stellzylinder 23 kann somit die zweite Lagerstütze 13 und folglich die Waschbürste 7 um die Schwenkachse D2 in Längsrichtung L geschwenkt werden. Die Waschbürste 7 kann dabei in Längsrichtung L vor und zurück geneigt werden. Ggf. kann in einer einfacheren Ausführung die Neigung dabei auch nur in die in Fig. 2 gezeigte Richtung erfolgen.

Vorzugsweise handelt es sich bei den Stellzylindern 18 und 23 um Pneumatik- oder Hydraulikzylinder, welche mindestens in eine Richtung wirken können, um die Drehachse A der Waschbürste 7 aus der in Fig. 1 gezeigten hängenden senkrechten Stellung S in die gewünschte schräge Stellung anzustellen, wie in Fig. 2 gezeigt. Die Rückbewegung von der geneigten Stellung kann bei derartigen einfach wirkenden Zylindern schwerkraftbewirkt erfolgen. Ggf. können zur schnelleren und definierten Einstellung der Schräge der Waschbürste auch doppelt wirkende Zylinder verwendet werden. Ggf. können auch andere Antriebe vorgesehen werden, um die Waschbürste 7 zu schwenken, beispielsweise elektrische Linearantriebe.

Somit kann die Waschbürste 7 sowohl an die schräg geneigte Heckfläche FH als auch an die schräg geneigte Seitenfläche FS des Fahrzeugs angepasst werden, wobei hierdurch dann auch die stark geneigten Übergangsflächen zwischen Heckfläche FH und Seitenfläche FS gut erreichbar sind.

Der Neigungsgrad der Seitenflächen FS, FS' und der Heckfläche FH kann durch eine an sich bekannte, vorher oder während einer ersten Überfahrt des Waschportals 2 über das Fahrzeug F erfolgte Konturerfassung bestimmt werden, um die Stellzylinder 18, 23 entsprechend ansteuern zu können. Die Konturerfassung kann dabei u. a. mittels Lichtschranken, Bildbearbeitungsmitteln etc erfolgen. Auch kann beispielsweise die Neigung der Heckfläche FH dadurch bestimmt werden, dass beim Waschen des Fahrzeugs F mit der Dachwaschbürste die Übergänge zwischen Dachfläche und Heckfläche FH sowie Heckfläche FH und dem Ende des Fahrzeugs sowie die zugehörigen Höhen der Dachwaschbürste miteinander in Beziehung gesetzt werden. Entsprechend kann die Neigung der Seitenflächen FS, FS' beim Reinigen mit den Waschbürsten 7, 7', beginnend an der Front des Fahrzeugs F bestimmt werden.

In einer vorteilhaften Ausbildung der Erfindung können die Neigungen der Seitenflächen FS, FS' und der Heckfläche FH auch durch Winkelsensoren erkannte werden, die die Auslenkung der Drehachse A der Waschbürste 7 aus ihrer Grundstellung um die Schwenkachsen DI und D2 erfassen. Bevorzugt kann dabei ein Winkelsensor zwischen der ersten Lagerstütze 12 und der zweiten Lagerstütze 13 zur Bestimmung der Neigung um die Schwenkachse DI und ein weiterer Winkelsensor zwischen der zweiten Lagerstütze 13 und dem Fahrschlitten 9 zur Bestimmung der Neigung um die Schwenkachse D2 vorgesehen werden.

Die entsprechenden Werte können dann in an sich bekannter Weise in der Steuerung der Portalwaschanlage 1 gespeichert und zu deren Steuerung herangezogen werden.

Die aktive Verschwenkung der Waschbürsten 7, 7' mittels der Aufhängung 8 wird nachfolgend anhand von Fig. 1 bis 5 erläutert. Soweit möglich, erfolgt dies vor allem anhand der rechten Waschbürste 7, entsprechende Ausführungen gelten auch für die linke Waschbürste 7'.

Vor der in Fig. 3 gezeigten Stellung der Waschbürsten 7, 7' wurden schon die Dachfläche FD und die Heckfläche FH des Fahrzeugs F mit der nicht gezeigten Dachwaschbürste und die Seitenflächen FS, FS', beginnend an der Front des Fahrzeugs F, gereinigt und dann die Waschbürsten 7, 7' um das Fahrzeugheck herum in die in Fig. 3 gezeigte mittige Ausgangsposition bewegt.

Von der mittigen Ausgangsposition in Fig. 3 Reinigen die Waschbürsten 7, 7' dann zunächst die Heckflächen FH des Fahrzeugs F beginnend von der Fahrzeugmitte zu den Seitenflächen FS, FS' des Fahrzeugs F hin. Dabei sind die Waschbürsten 7, 7' in Längsrichtung L, also um die Schwenkachse D2 um ca. 15° aktiv durch den Stellzylinder 23 um die Schwenkachse D2 geschwenkt, um die entsprechend schräg geneigte Heckfläche FH sauber waschen zu können. Die Schrägstellung der Drehachse A ist in Fig. 3 bis 5 durch die strichpunktierten Linien angedeutet, welche die Position der unteren Enden der Waschbürsten 7, 7' zeigen, während die Position der oberen Enden der Waschbürsten 7, 7' durch die durchgezogenen Linien angezeigt ist.

In Querrichtung Q hingegen wird die Waschbürste 7 senkrecht gehalten, die Drehachse A der Waschbürste 7 also durch den ersten Zylinder 18 fixiert.

Sobald anhand der Daten der Konturerfassung festgestellt wird, dass die Waschbürsten 7, 7' in den Bereich der geneigten Seitenflächen FS, FS' des Fahrzeugs F gelangen, werden die Waschbürsten 7, 7' in Querrichtung Q nach außen geschwenkt. Dies ist in Fig. 4 dadurch angedeutet, dass die Drehachsen A, A' der Waschbürsten 7, 7' gedachte, in der Steuerung aus den Konturdaten ermittelte Begrenzungslinien B, B' nach außen hin überschreiten. Der Neigungswinkel der Drehachse A in Querrichtung Q entspricht dabei bevorzugt der Neigung der Seitenflächen FS, FS' im Bereich der C-Säule, so dass diese schrägen Übergangsbereiche N, N' gut gereinigt werden. Hier beträgt der Neigungswinkel in Querrichtung Q rund 5°.

Bevorzugt wird dabei die Drehachse A nicht abrupt geschwenkt, sondern an die Kontur des Fahrzeugs F angepasst ausgeführt. Hierzu können die durch die Konturerfassung ermittelten Fahrzeugdaten verwendet werden, um den Neigungswinkel in beiden Richtungen möglichst gut und bevorzugt kontinuierlich an die Neigung der Heckfläche FH und der Seitenflächen FH, FS, FS' anzupassen. Hierzu sind die Stellzylinder 18, 23 bevorzugt als Mehrstellungszylinder ausgebildet, so dass jeder Neigungswinkel einstellbar ist. Mit Anpassen ist dabei nicht gemeint, dass der Neigungswinkel der Drehachsen A, A' der Waschbürsten 7, 7' exakt mit den Neigungswinkeln der Seitenflächen FS, FS' oder der Heckfläche FH übereinstimmt, sondern dass eine ungefähre Anpassung mit einer gewissen Toleranz stattfindet, da die Übergangsbereiche N, N' oft keinen über die gesamte Höhe des Fahrzeugs gleichbleibenden Winkel aufweisen.

Wie in Fig. 4 durch die gebogenen Pfeile angedeutet, vollführen die Waschbürsten 7, 7' dabei einen Weg entlang der Übergangsbereiche N, N' zwischen Heckfläche FH und Seitenflächen FS, FS'.

Ist die Heckfläche FH einschließlich der Übergangsbereiche N, N' zwischen der Heckfläche FH und den Seitenflächen FS, FS' gereinigt, werden die Waschbürsten 7, 7' in Längsrichtung L in ihre Grundstellung S zurückgeschwenkt, und hängen somit senkrecht nach unten, wie in Fig. 5 gezeigt. In Querrichtung bleiben die Waschbürsten 7, 7' unverändert geneigt, um die schrägen Seitenflächen FS, FS' beim nachfolgenden Überfahren des Fahrzeugs F reinigen zu können.

Das oben beschriebene Verfahren ist vor allem bei Fahrzeugen F mit großer Neigung der Seitenflächen FS, FS' sinnvoll, um zu vermeiden, dass die Gewichtskraft der Waschbürsten 7, 7' auf die Seitenfläche FS, FS' wirkt, wenn die Waschbürsten 7, 7' in Querrichtung Q frei beweglich wären.

In einer vorteilhaften alternativen Ausführung können die Waschbürsten 7, 7' beim Übergang von der in Fig. 3 gezeigten Stellung zu der in Fig. 4 gezeigten Stellung bei in Längsrichtung L aktiv geschwenkter Waschbürste 7, 7' in Querrichtung Q nicht durch den Stellzylinder 18 aktiv geschwenkt werden, sondern der Stellzylinder 18 freigeschaltet werden, sodass die Waschbürsten 7, 7' in Querrichtung Q frei pendeln können. Dies geschieht wieder, sobald die Waschbürsten 7, 7' beim Verfahren in Querrichtung Q den zuvor festgestellten Bereich der Fahrzeugseiten FS bzw FS' erreichen, also wenn die Drehachsen A, A' die Begrenzungslinien B, B' nach außen hin überschreiten. Dadurch kann sich die Neigung der Drehachse A der Neigung der Seitenflächen FS, FS' in den Übergangsbereichen N, N' der C-Säule anpassen, sodass die Waschbürsten 7, 7' sich gut an diese zweifach geneigten Übergangsbereiche anschmiegen und diese reinigen. Hier beträgt der Neigungswinkel in Querrichtung Q ca. 3° bis 8°. Die Waschbürsten 7, 7' verfahren dann nicht mehr weiter nach außen als bis zu der vorher über die Konturerfassung bestimmten seitlichen Ausdehnung der Fahrzeugseiten FS bzw. FS'.

Dies ist bei Fahrzeugen F mit kleinerer Neigung der Seitenflächen FS, FS' sinnvoll, da hier die Waschbürsten 7, 7' in Querrichtung Q sehr steil stehen und somit nur eine relativ geringe Gewichtskraft auf die Seitenflächen FS, FS' wirkt. Überschreitet die Neigung der Seitenflächen FS, FS' jedoch einen vorgegebenen Wert, beispielsweise 10°, so werden die Waschbürsten 7, 7' automatisch durch den ersten Stellzylinder 18 in der geneigten Stellung mit entsprechendem Winkel festgestellt, um die Gewichtskraft von den Seitenflächen FS, FS' zu nehmen.

In einer alternativen Ausführung kann einer oder auch beide Stellantriebe 18, 23 auch nur als Zweistellungszylinder ausgeführt sein, wobei dann keine möglichst winkeltreue und ggf. sich ständige anpassende Neigung der Drehachsen A, A' der Waschbürsten 7, 7' eingestellt wird, sondern entweder die Grundstellung oder die durch den Zweistellungszylinder vorgegebene Neigung, beispielsweise 15°.

Hierdurch lassen sich zum einen Kosten für die Stellantriebe und die Konturerfassung reduzieren, zum anderen lässt sich der steuerungstechnische Aufwand reduzieren. Denn dann muss nicht ständig der Neigungswinkel der Drehachsen A, A', ggf. um die zwei Schwenkachsen DI, D2, nachgeführt werden, sondern bei Erreichen der Übergangsbereiche N, N' bzw. dem Beginn der Neigung der Seitenflächen FS, FS' bzw. der Heckfläche FH wird die Drehachse A, A' durch den jeweilige Stellantrieb 18, 23 in die einzige geneigte Stellung gebracht. Diese Vereinfachung ist natürlich auch mit den oben beschriebenen Mehrstellungszylindern möglich. Bei diesen können vorteilhaft beispielsweise auch nur drei Stellungen (Grundstellung, schwach geneigt und stark geneigt) realisieren, um ebenfalls den steuerungstechnischen Aufwand zu reduzieren.

### Bezugszeichenliste

1 Portalwaschanlage (Fahrzeugbehandlungsanlage)
2 Waschportal
3, 3' Portalsäulen
4 Portaltraverse
5, 5' Fahrfüße
6, 6' Fahrschienen
7, 7' Seitenwaschbürsten
8 Aufhängung Seitenwaschbürste
9 Fahrschlitten
10 Bürstenhalterung
11 Antriebsmotor Waschbürste
12 erste Lagerstütze
13 zweite Lagerstütze
14 Lagerblöcke
15 erster Lagersteg
16 Lagerflansche
17 Kolbenstange erster Zylinder
18 erster Stellzylinder
19 Lagerflansche
20 zweiter Lagersteg
21 Lagerflansche
22 Kolbenstange zweiter Zylinder
23 zweiter Stellzylinder
24 Lagerflansche
A, A' Drehachse Waschbürste
S Stellung der frei hängenden Waschbürstendrehachse B, B' seitliche Begrenzungslinien
D1 Drehachse Aufhängung in Querrichtung
D2 Drehachse Aufhängung in Längsrichtung
F Fahrzeug
FD Fahrzeugdachfläche
FH Fahrzeugheckfläche
FS, FS' Fahrzeugseitenflächen
N, N' Übergangsbereiche des Fahrzeughecks
L Längsrichtung der Portalwaschanlage
Q Querrichtung
α Neigungswinkel in Längsrichtung

## Patentansprüche

1. Fahrzeugwaschanlage (1) mit
mindestens einer Seitenwaschbürste (7, 7'), die mittels einer Aufhängung (8) um eine erste Schwenkachse (D1) und eine davon unterschiedliche zweite Schwenkachse (D2) drehbar an einem quer zu einer Längsrichtung der Fahrzeugwaschanlage (1) an einer Traverse (4) der Fahrzeugwaschanlage (1) verfahrbaren Schlitten (9) gelagert ist, wobei die erste Schwenkachse (D1) und die zweite Schwenkachse (D2) im wesentlichen horizontal verlaufen,
wobei die Aufhängung (8) einen ersten Stellantrieb (18) zum Verschwenken der Seitenwaschbürste (7, 7') um die erste Schwenkachse (D1) und einen zweiten Stellantrieb (23) zum Verschwenken der Seitenwaschbürste (7, 7') um die zweite Schwenkachse (D2) aufweist,
**dadurch gekennzeichnet, dass** der erste Stellantrieb (18) und der zweite Stellantrieb (23) Linearantriebe sind, nämlich Zweistellungszylinder oder beliebige verstellbare Mehrstellungszylinder,
wobei die Aufhängung (8) eine erste Lagerstütze (12) aufweist, die um die eine der Schwenkachsen (D1) drehbar an einer zweiten Lagerstütze (13) gelagert ist, und die zweite Lagerstütze (13) um die andere Schwenkachse (D2) drehbar an der Traverse (4) gelagert ist,
wobei der erste Stellantrieb (18) zwischen erster Lagerstütze (12) und zweiter Lagerstütze (13) und der zweite Stellantrieb (23) zwischen zweiter Lagerstütze (13) und der Traverse (4) wirkt, und
wobei die erste Lagerstütze (12) einen weitgehend rechtwinklig abstehenden ersten Lagersteg (15) aufweist, der an seinem vorderen Ende erste Lagerflansche (16) für die drehbare Befestigung einer ersten Kolbenstange (17) eines ersten Stellzylinders, der den ersten Stellantriebs (18) darstellt, aufweist, und der erste Stellzylinder über zweite Lagerflansche (19) drehbar an der zweiten Lagerstütze (13) gelagert ist.

2. Fahrzeugwaschanlage (1) nach Anspruch 1, **dadurch gekennzeichnet, dass** die erste Schwenkachse (D1) in eine Längsrichtung (L) der Fahrzeugwaschanlage (1) verläuft und/oder die zweite Schwenkachse (D2) in eine quer zur Längsrichtung (L) der Fahrzeugwaschanlage (1) verlaufende Querrichtung (Q) verläuft, wobei insbesondere die erste Schwenkachse (D1) und die zweite Schwenkachse (D2) zueinander rechtwinklig verlaufen.

3. Fahrzeugwaschanlage (1) nach Anspruch 1, **dadurch gekennzeichnet, dass** der erste (18) und der zweite Stellantrieb (23) zu einem gemeinsamen Stellantrieb zusammengefasst sind, der die Drehung um beide Schwenkachsen (D1, D2) bewirkt.

4. Fahrzeugwaschanlage (1) nach einem der voranstehenden Ansprüche, **dadurch gekennzeichnet, dass** ein Neigungssensor zur Detektion der Neigung der Seitenwaschbürste (7, 7') um die erste Schwenkachse (D1) und/oder ein Neigungssensor zur Detektion der Neigung der Seitenwaschbürste (7, 7') um die zweite Schwenkachse (D2) vorgesehen ist.

5. Fahrzeugwaschanlage (1) nach Anspruch 1, **dadurch gekennzeichnet, dass** die zweite Lagerstütze (13) einen rechtwinklig davon abstehenden zweiten Lagersteg (20) aufweist, der an seinem freien Ende dritte Lagerflansche (21) trägt, an denen eine zweite Kolbenstange (22) eines zweiten Stellzylinders, der den zweiten Stellantrieb (23) darstellt, drehbar angelenkt ist und der zweite Stellzylinder seinerseits über vierte Lagerflansche (24) drehbar an dem Schlitten (9) angelenkt ist.

6. Fahrzeugwaschanlage (1) nach einem der voranstehenden Ansprüche, **dadurch gekennzeichnet, dass** die Seitenwaschbürste (7, 7') nach unten frei hängend angeordnet ist.

7. Verfahren zum Betrieb einer Fahrzeugwaschanlage, die nach einem der voranstehenden Ansprüche ausgebildet ist, **gekennzeichnet durch** die Schritte:
a) Detektieren und/oder Bestimmen der Neigung einer quer zur Längsrichtung (L) verlaufenden ersten Fahrzeugfläche (FH),
b) Verschwenken der Seitenwaschbürste (7, 7') aus einer Grundstellung (S) um die zweite Schwenkachse (D2) entsprechend der Neigung der ersten Fahrzeugfläche (FH),
c) Bewegen der Seitenwaschbürste (7, 7') entlang der ersten Fahrzeugfläche (FH) zum Reinigen der ersten Fahrzeugfläche (FH).

8. Verfahren nach Anspruch 7, **dadurch gekennzeichnet, dass** die Neigung mindestens einer sich an die erste Fahrzeugfläche (FH) anschließenden zweiten Fahrzeugfläche (FS, FS') detektiert wird, und die Seitenwaschbürste (7, 7') mittels eines weiteren Stellantriebs (18) um die erste Schwenkachse (D1) entsprechend der Neigung der zweiten Fahrzeugfläche (FS, FS') verschwenkt wird, wenn in Schritt c) ein Übergangsbereich (N, N') zwischen der ersten Fahrzeugfläche (FH) und der zweiten Fahrzeugfläche (FS, FS') erreicht wird.

9. Verfahren nach Anspruch 7 oder 8, **dadurch gekennzeichnet, dass** das Verschwenken der Seitenwaschbürste (7, 7') um die erste Schwenkachse (D1) während Schritt c) blockiert wird.

10. Verfahren nach einem der Ansprüche 7 bis 9, **dadurch gekennzeichnet, dass** die Seitenwaschbürste (7, 7') zum Waschen der zweiten Fahrzeugfläche (FS, FS') in die Grundstellung (S) zurückgeschwenkt und dort gegen ein Verschwenken um die zweite Schwenkachse (D2) blockiert wird.

## Claims

1. A vehicle washing installation (1)
with at least one side washing brush (7, 7'), which is mounted on a carriage (9) which is movable on a crossmember (4) of the vehicle washing installation (1) transversely with respect to a longitudinal direction of the vehicle washing installation (1) by means of a suspension (8) so as to be rotatable about a first pivot axis (D1) and a second pivot axis (D2) which differs therefrom, wherein the first pivot axis (D1) and the second pivot axis (D2) run substantially horizontally,
wherein the suspension (8) has a first actuating drive (18) for pivoting the side washing brush (7, 7') about the first pivot axis (D1) and a second actuating drive (23) for pivoting the side washing brush (7, 7') about the second pivot axis (D2),
**characterized in that** the first actuating drive (18) and the second actuating drive (23) are linear drives, that is two position cylinders or any adjustable multiposition cylinders,
wherein the suspension (8) has a first bearing support (12) which is mounted on a second bearing support (13) so as to be rotatable about one of the pivot axes (D1), and the second bearing support (13) is mounted on the crossmember (4) so as to be rotatable about the other pivot axis (D2),
wherein the first actuating drive (18) acts between the first bearing support (12) and the second bearing support (13) and the second actuating drive (23) acts between the second bearing support (13) and the crossmember (4), and
wherein the first bearing support (12) has a first bearing web (15) protruding substantially at right angles and having first bearing flanges (16) at its front end for the rotatable fastening of a first piston rod (17) of a first actuating cylinder representing the first actuating drive (18), and the first actuating cylinder being mounted rotatably on the second bearing support (13) via second bearing flanges (19).

2. The vehicle washing installation (1) as claimed in claim 1, **characterized in that** the first pivot axis (D1) runs in a longitudinal direction (L) of the vehicle washing installation (1) and/or the second pivot axis (D2) runs in a transverse direction (Q) running transversely with respect to the longitudinal direction (L) of the vehicle washing installation (1), wherein, in particular, the first pivot axis (D1) and the second pivot axis (D2) run at right angles to each other.

3. The vehicle washing installation (1) as claimed in claim 1, **characterized in that** the first actuating drive (18) and the second actuating drive (23) are combined to form a common actuating drive which can bring about the rotation about the two pivot axes (D1, D2).

4. The vehicle washing installation (1) as claimed in any one of the preceding claims, **characterized in that** an inclination sensor is provided for detecting the inclination of the side washing brush (7, 7') about the first pivot axis (D1) and/or an inclination sensor is provided for detecting the inclination of the side washing brush (7, 7') about the second pivot axis (D2).

5. The vehicle washing installation (1) as claimed in claim 1, **characterized in that** the second bearing support (13) has a second bearing web (20) protruding at right angles therefrom and bearing at its free end third bearing flanges (21) to which a second piston rod (22) of a second actuating cylinder representing the second actuating drive (23) is rotatably coupled, and the second actuating cylinder for its part being coupled rotatably to the carriage (9) via fourth bearing flanges (24).

6. The vehicle washing installation (1) as claimed in any one of the preceding claims, **characterized in that** the side washing brush (7, 7') is arranged hanging freely downward.

7. A method for the operation of a vehicle washing installation designed according to one of the preceding claims, **characterized by** the following steps:
a) Detecting and/or determining the inclination of a first vehicle surface (FH) running transversely with respect to the longitudinal direction (L),
b) Pivoting the side washing brush (7, 7') out of a basic position (S) about the second pivot axis (D2) corresponding to the inclination of the first vehicle surface (FH),
c) Moving the side washing brush (7, 7') along the first vehicle surface (FH) to clean the first vehicle surface (FH).

8. The method as claimed in claim 7, **characterized in that** the inclination of at least one second vehicle surface (FS, FS') adjoining the first vehicle surface (FH) is detected, and the side washing brush (7, 7') is pivoted by means of a further actuating drive (18) about the first pivot axis (D1) corresponding to the inclination of the second vehicle surface (FS, FS') if, in step c), a transition region (N, N') between the first vehicle surface (FH) and the second vehicle surface (FS, FS') is reached.

9. The method as claimed in claim 7 or 8, **characterized in that** the pivoting of the side washing brush (7, 7') about the first pivot axis (D1) is blocked during step c).

10. The method as claimed in any one of claims 7 to 9, **characterized in that,** for washing the second vehicle surface (FS, FS'), the side washing brush (7, 7') is pivoted back into the basic position (S) and is blocked there against pivoting about the second pivot axis (D2).

## Revendications

1. Installation de lavage de véhicule (1) comprenant :
au moins une brosse de lavage latérale (7, 7') qui, au moyen d'une suspension (8), est montée à rotation autour d'un premier axe de pivotement (D1) et d'un deuxième axe de pivotement (D2) différent de ce dernier, sur un chariot (9) pouvant se déplacer sur une traverse (4) de l'installation de lavage de véhicule (1) dans une direction transversale à une direction longitudinale de ladite installation de lavage de véhicule (1), ledit premier axe de pivotement (D1) et ledit deuxième axe de pivotement (D2) s'étendant essentiellement horizontalement ;
ladite suspension (8) présentant un premier actionneur (18) servant au pivotement de la brosse de lavage latérale (7, 7') autour du premier axe de pivotement (D1) et un deuxième actionneur (23) servant au pivotement de la brosse de lavage latérale (7, 7') autour du deuxième axe de pivotement (D2),
**caractérisée en ce que** le premier actionneur (18) et le deuxième actionneur (23) sont des entraînements linéaires, à savoir des vérins à deux positions ou tout vérin à multiples positions réglable,
ladite suspension (8) présentant un premier support de palier (12) qui est supporté à rotation autour de l'un des axes de pivotement (D1) sur un deuxième support de palier (13), ledit deuxième support de palier (13) étant supporté à rotation autour de l'autre axe de pivotement (D2) sur la traverse (4),
ledit premier actionneur (18) agissant entre le premier support de palier (12) et le deuxième support de palier (13), et ledit deuxième actionneur (23) agissant entre le deuxième support de palier (13) et la traverse (4), et
ledit premier support de palier (12) présentant une première aile de palier (15) en saillie sensiblement à angle droit, laquelle présente des premières brides de palier (16) à son extrémité avant pour la fixation à rotation d'une première tige de piston (17) d'un premier vérin constituant le premier actionneur (18), le premier vérin étant supporté à rotation sur le deuxième support de palier (13) par l'intermédiaire de deuxièmes brides de palier (19).

2. Installation de lavage de véhicule (1) selon la revendication 1, **caractérisée en ce que** le premier axe de pivotement (D1) s'étend dans une direction longitudinale (L) de l'installation de lavage de véhicule (1) et/ou le deuxième axe de pivotement (D2) s'étend dans une direction transversale (Q) qui est transversale à la direction longitudinale (L) de l'installation de lavage de véhicule (1), ledit premier axe de pivotement (D1) et ledit deuxième axe de pivotement (D2) s'étendant notamment à angle droit l'un par rapport à l'autre.

3. Installation de lavage de véhicule (1) selon la revendication 1, **caractérisée en ce que** le premier (18) et le deuxième actionneur (23) sont combinés pour former un actionneur commun qui provoque une rotation autour des deux axes de pivotement (D1, D2).

4. Installation de lavage de véhicule (1) selon l'une des revendications précédentes, **caractérisée en ce qu'**il est prévu un capteur d'inclinaison permettant de détecter l'inclinaison de la brosse de lavage latérale (7, 7') autour du premier axe de pivotement (D1) et/ou un capteur d'inclinaison permettant de détecter l'inclinaison de la brosse de lavage latérale (7, 7') autour du deuxième axe de pivotement (D2).

5. Installation de lavage de véhicule (1) selon la revendication 1, **caractérisée en ce que** le deuxième support de palier (13) présente une deuxième aile de palier (20) en saillie à angle droit par rapport à celui-ci et portant, à son extrémité libre, des troisièmes flasques de palier (21), sur lesquelles une deuxième tige de piston (22) d'un deuxième vérin constituant le deuxième actionneur (23), est montée articulée à rotation, et le deuxième vérin est lui-même monté articulé à rotation sur le chariot (9) par l'intermédiaire de quatrièmes brides de palier (24).

6. Installation de lavage de véhicule (1) selon l'une des revendications précédentes, **caractérisée en ce que** la brosse de lavage latérale (7, 7') est disposée en pendant librement vers le bas.

7. Procédé d'exploitation d'une installation de lavage de véhicule conçue selon l'une des revendications précédentes, **caractérisé par** les étapes suivantes consistant à :
a) détecter et/ou déterminer l'inclinaison d'une première surface (FH) du véhicule s'étendant transversalement à la direction longitudinale (L),
b) faire pivoter la brosse de lavage latérale (7, 7'), à partir d'une position de base (S), autour du deuxième axe de pivotement (D2) en fonction de l'inclinaison de la première surface (FH) du véhicule,
c) déplacer la brosse de lavage latérale (7, 7') le long de la première surface (FH) du véhicule pour nettoyer ladite première surface (FH) du véhicule.

8. Procédé selon la revendication 7, **caractérisé en ce que** l'inclinaison d'au moins une deuxième surface (FS, FS') du véhicule attenante à la première surface (FH) du véhicule est détectée, et la brosse de lavage latérale (7, 7') subit un pivotement au moyen d'un autre actionneur (18), autour du premier axe de pivotement (D1) en fonction de l'inclinaison de la deuxième surface (FS, FS') du véhicule lorsqu'il est atteint, à l'étape c), une zone de transition (N, N') entre la première surface (FH) du véhicule et la deuxième surface (FS, FS') du véhicule.

9. Procédé selon la revendication 7 ou 8, **caractérisé en ce que** le pivotement de la brosse de lavage latérale (7, 7') autour du premier axe de pivotement (D1) est bloqué au cours de l'étape c).

10. Procédé selon l'une des revendications 7 à 9, **caractérisé en ce que,** pour laver la deuxième surface (FS, FS') du véhicule, la brosse de lavage latérale (7, 7') est ramenée à la position de base (S), à laquelle elle subit un blocage empêchant tout pivotement autour du deuxième axe de pivotement (D2).
